# EUROPÄISCHE PATENTSCHRIFT

(11) **EP 2 886 961 B1**
(45) Veröffentlichungstag und Bekanntmachung des Hinweises auf die Patenterteilung: **13.07.2016**
(21) Anmeldenummer: 14194726.7
(22) Anmeldetag: 25.11.2014
(51) Int. Cl.: F23R 3/00

(54) **Unterlegscheibe einer Brennkammerschindel einer Gasturbine**
Washer of a combustion chamber shingle of a gas turbine
Rondelle de bardeaux de chambre de combustion d'une turbine à gaz

(30) Priorität: 18.12.2013 DE 102013226488
(43) Veröffentlichungstag der Anmeldung: 24.06.2015
(73) Patentinhaber: Rolls-Royce Deutschland Ltd & Co KG, 15827 Blankenfelde-Mahlow (DE)
(72) Erfinder: Gerendás, Miklós, 15838 Am Mellensee (DE); Filipova, Tijana, 12101 Berlin (DE)
(74) Vertreter: Hoefer & Partner Patentanwälte mbB

(56) Entgegenhaltungen:
- EP-A1- 2 743 585

## Beschreibung

Die Erfindung bezieht sich auf eine Unterlegscheibe einer Brennkammerschindel einer Gasturbine.

Im Einzelnen bezieht sich die Erfindung auf eine Unterlegscheibe gemäß den Merkmalen des Anspruchs 1.

Die Erfindung betrifft somit eine Unterlegscheibe einer Brennkammerschindel einer Gasturbine mit einem runden, scheibenförmigen Grundkörper, der mit einer mittigen Ausnehmung versehen ist Derartige Unterlegscheiben werden auf Gewindebolzen aufgesteckt, die einstückig mit den Brennkammerschindeln ausgebildet sind oder an diesen befestigt sind. Die Gewindebolzen durchgreifen Ausnehmungen der Brennkammerwand oder Tragstruktur und werden mittels Muttern gesichert. Um zum einen eine sichere Auflage der Muttern zu gewährleisten und um zum anderen Toleranzen in den Ausnehmungen der Brennkammerwand ausgleichen zu können, werden Unterlegscheiben zwischengelegt.

Durch die Brennkammerwand, in der eine Vielzahl von Prallkühllöchem ausgebildet sind, wird Kühlluft auf die dem Brennkammerinnenraum abgewandte Seite der Brennkammerschindeln aufgeblasen. Die Kühlung erfolgt, um die Brennkammerschindeln zu kühlen und um thermische Schäden zu vermeiden. Dabei ergibt sich im Befestigungsbereich der Gewindebolzen die Schwierigkeit, diesen Bereich, der entsprechend verdickt ausgebildet ist, geeignet zu kühlen.

Beschindelte Brennkammern von Gasturbinen sind bekannt aus EP 0 576 435 B1, EP 0 741 268 B1, EP 1 710 501 A2. Die Schindeln werden in Gasturbinenbrennkammem eingesetzt, um die Trage- und Dichtstruktur vor der intensiven Wärmestrahlung der Flamme zu schützen. Die Tragstruktur bleibt dadurch kühl und fest.

Die US 2011/0011095 A1 zeigt eine beschindelte Brennkammer mit einer porösen Unterlegscheibe, durch welche Kühlkanäle von der Seite der Brennkammerwand, auf der die Mutter aufliegt, auf die gegenüberliegende Seite geführt werden. Diese erzeugen in dem Bereich, der durch die Unterlegscheibe abgedeckt wird, eine Prallkühlung auf der Schindel. Durch die Abdeckung eines Langlochs durch die ovale Unterlegscheibe wird nahe am Bolzen nur auf einer Seite Kühlluft zugeführt, die auch nicht speziell auf den Übergang der Schindel zum Bolzen gerichtet wird. Der Schindel wird auf der gegenüberliegenden Seite keine zusätzliche Kühlluft zugeführt. Hierdurch entsteht eine asymmetrische Temperaturverteilung in der Schindel im Bereich um den Bolzen, was die Spannungen im Übergang zwischen Bolzen und Schindel erhöht.

Aus der EP 2 743 585 A1 sind unterschiedliche Unterlegscheiben einer Brennkammerschindel einer Gasturbine vorbekannt. Diesen ist gemeinsam, dass eine Zuströmung von Luft zur Kühlung eines Gewindebolzens einer Brennkammerschindel möglich ist. Der sich dabei ergebende Kühleffekt ist jedoch nicht für alle Betriebsbedingungen und Einbauorte optimal, es ist insbesondere nicht immer gewährleistet, dass ein ausreichender Kühlluftstrom strömungsoptimiert durch die Unterlegscheibe geführt wird.

Der Erfindung liegt die Aufgabe zugrunde, eine Unterlegscheibe der eingangs genannten Art zu schaffen, welche bei einfacher und kostengünstiger Ausgestaltung und Herstellbarkeit eine gute Kühlung der Brennkammerschindel im Bereich des Gewindebolzens ermöglicht.

Erfindungsgemäß wird die Aufgabe durch die Merkmalskombination des Anspruchs 1 gelöst, die Unteransprüche zeigen weitere vorteilhafte Ausgestattungen der Erfindung.

Erfindungsgemäß ist somit vorgesehen, dass die Unterlegscheibe einen runden, scheibenförmigen Grundkörper mit einer mittigen Ausnehmung umfasst, wobei der Grundkörper eine erste Seite aufweist, die eben ausgebildet ist und auf welche die Mutter auflegbar ist. Die gegenüberliegende zweite Seite der erfindungsgemäßen Unterlegscheibe weist mehrere nutartige Luftkanäle auf, durch welche Kühlluft vom Umfangsrand der Unterlegscheibe einströmen kann. Die Kühlluft wird in der erfindungsgemäßen Unterlegscheibe zunächst in radialer Richtung geführt und dann in axiale Richtung, bezogen auf die Mittelachse der Unterlegscheibe, umgeleitet. Somit wird die Kühlluft gleichmäßig um den gesamten Umfang der Unterlegscheibe eingeführt und somit gleichmäßig dem gesamten Umfang des Gewindebolzens oder Stehbolzens zugeführt. Die erfindungsgemäße Unterlegscheibe bildet somit eine poröse Gesamtstruktur, durch welche ein großes Luftvolumen zugeführt werden kann.

Durch die ebene, erste Seite der Unterlegscheiben, an welcher keine nutartigen Luftkanäle oder Ähnliches ausgebildet sind, ist es möglich, die Unterlegscheibe in einfacher Weise zu fertigen, beispielsweise mittels eines Sinterverfahrens oder eines ähnlichen Herstellungsverfahrens. Alternativ hierzu kann die erfindungsgemäße Unterlegscheibe auch mittels eines Gussverfahrens oder durch ein Auftragsverfahren (Laserauftragsverfahren oder Elektronenstrahlauftragsverfahren) hergestellt werden.

Weiterhin ist es erfindungsgemäß auch möglich, die erfindungsgemäße Unterlegscheibe in rein mechanischer Fertigung herzustellen oder durch ein MIM-Druckgussverfahren (metal injection moulding). Die einfache und kostengünstige Herstellung wird, wie erwähnt, dadurch gefördert, dass sich die Kühlluftstrukturen weder an der ersten Seite, noch an dem Umfang befinden, sondern lediglich von der zweiten Seite aus angeordnet sind.

Durch die erfindungsgemäße Umlenkung der zunächst in radialer Richtung eintretenden Kühlluft in axiale Richtung wird die Kühlluft so geführt, dass sie auf den Fußbereich des Gewindebolzens auftritt und diesen kritischen Bereich besonders gut kühlen kann. Da die zweite Seite der Unterlegscheibe auf der Oberfläche der Brennkammerwand aufliegt, ergeben sich jeweils Luftkanäle, die strömungsoptimiert ausgebildet sein können. Dabei erweist es sich als besonders vorteilhaft, wenn der Querschnitt der Luftkanäle halbkreisförmig oder halbelliptisch ausgebildet ist. Insbesondere hinsichtlich der Herstellung als Sinterprodukt ist es günstig, wenn die jeweiligen Achsen der halbkreisförmigen oder halbelliptischen Querschnitte nicht in der zweiten Seite der Unterlegscheibe liegen, sondern von dieser beabstandet sind. Somit weisen die Übergangswandbereiche der Luftkanäle einen Winkel von mehr als 90° auf, so dass das Ausformen eines Stempelwerkzeugs oder ähnlichem zur Herstellung des Sinterkörpers erleichtert wird.

Die Luftkanäle sind bevorzugterweise sowohl am Einlaufbereich, von der Umfangsseite gesehen, als auch am Umlenkbereich abgerundet ausgebildet. Auch die Umlenkung von dem radialen Bereich in den axialen Bereich erfolgt bevorzugt mit einem Radius, der größer ist, als der Radius des Luftkanals bzw. beider Halbachsen des zugrundeliegenden elliptischen Querschnitts. Auch hier Ist die Wand nahe des Kühlluftauslasses nicht vollständig parallel zur Achse der zentralen mittigen Ausnehmung der Unterlegscheibe. Auch dies fördert zum einen die Herstellbarkeit als auch zum anderen die Strömung der Kühlluft.

Besonders günstig ist es, wenn am Umfang drei bis sechs Kühlkanäle vorgesehen sind, es ist jedoch auch möglich, eine andere Anzahl an Kühlkanälen in der erfindungsgemäßen Unterlegscheibe auszubilden. Besonders wichtig ist es dabei, wenn die aus den axialen Bereichen ausströmende Kühlluft nahezu parallel zur Oberfläche des Gewindebolzens oder Stehbolzens in Richtung auf die Brennkammerschindel strömt. Zur Verbesserung der Strömungsführung kann es weiterhin besonders günstig sein, die Unterlegscheibe an ihrer zweiten Seite mittels eines Ansatzes zu verlängern. Dieser kann sich durch eine Ausnehmung der Brennkammerwand erstrecken und dient dazu, die Kühlluft präziser an den Fußbereich des Gewindebolzens zu leiten. Auch diese Ausnehmung der Brennkammerwand kann erfindungsgemäß mit einem leicht konischen Querschnittsverlauf versehen sein, welcher auf der der Mutter abgewandten Seite der Brennkammerwand einen geringfügig größeren Durchmesser aufweist, als an der der Mutter zugewandten Oberseite.

Um die Einströmung der Kühlluft in die Kühlluftkanäle zu verbessern, kann vorgesehen sein, insbesondere am Außenrand der Unterlegscheibe einen Einlaufradius auszubilden.

Um ein Einschneiden der Unterlegscheibe in die Brennkammerwand zu verhindern, sind die Übergänge zwischen den Kühlkanälen und der Auflagefläche sowie der Übergang der Auflagefläche zum Umfangsrand hin sorgfältig ausgerundet. Aus dem gleichen Grund ist der Übergang zwischen der Auflagefläche und dem durch die Brennkammerwand reichenden Kragen mit einem Freistich versehen.

Erfindungsgemäß kann die Unterlegscheibe rund oder oval ausgebildet sein, um bei runden Löchern von Brennkammerschindeln eingesetzt werden oder bei Langlöchern von Brennkammerschindeln, um größere Winkelbereiche abzudecken und Fertigungstoleranzen oder Montagetoleranzen auszugleichen, insbesondere, da die Gewindebolzen bei der Montage nicht entlang ihrer Achse durch die Brennkammerwand geführt werden können.

Erfindungsgemäß ergeben sich insbesondere folgende Vorteile:
Die gleichmäßige Ausbringung der Kühlluft durch drei oder mehr Kühlkanäle in der Art, dass die Kühlluft aus der Unterlegscheibe in Richtung Brennkammerschindel fließt, erzeugt eine konvektive Kühlung auf dem Übergang zwischen Stehbolzen und Brennkammerschindel. Dadurch sinkt die Temperatur an dieser Stelle und die Lebensdauer der Brennkammerschindel steigt.

Die Definition von allen Details auf einer Seite der Unterlegscheibe bzw. der Oberfläche der Brennkammerschindel vereinfacht die Fertigung. Bei der mechanischen Fertigung ist die Seite ohne Details noch mit dem Stangenmaterial verbunden, an welchem die Klemmung angreift, und die andere Seite ist frei zugänglich für die Bearbeitung. Beim Feinguss sind die Speiser und Steiger auf der Seite ohne Details, welche danach einfach plan abgeschnitten werden können. Bei einer MIM-Fertigung liegt die Unterlegscheibe auf der glatten, detaillosen Oberseite beim Sintern auf und bleibt exakt plan. Alle Details auf der Unterseite können ohne negative Auswirkungen beim Sintern schrumpfen.

Die Winkel größer 90° im Material für die Kanten zwischen dem Luftkanal und der Unterseite der Unterlegscheibe sowie am Kühlkanalaustritt erleichtern die Zugänglichkeit bei der mechanischen Fertigung, vereinfachen das Entformen des Wachspositivs für den Feinguss und auch das Entformen des MIM-Grünlings nach dem Spritzgießen.

Der Einlaufradius vermindert den Einlassdruckverlust und stellt somit mehr Druckverlust für die Beschleunigung der Strömung im weiteren Verlauf des Luftkanals zur Verfügung. Auch kann durch die vollständige Füllung des Luftkanals mit Luft von hoher Strömungsgeschwindigkeit der Querschnitt des Luftkanals bei gleichem Luftdurchsatz vermindert werden, was der Stabilität des Bauteils dient und auch hilft, die Dicke der Unterlegscheibe zu begrenzen.

Die sorgfältige Ausrundung der Übergänge von der Auflagefläche zu den Kühlkanälen, zum Umfangsrand und der Freistich am Kragen verhindern, dass die Unterlegscheibe in die Brennkammerwand einschneidet und sich somit mit der Zeit zuerst eine Kerbe und dann ein Riss an dieser Stelle bildet.

Vorzugsweise deckt die Unterlegscheibe die Kontaktpunkte zwischen Brennkammerschindel und Brennkammerwand ab, um eine Biegebelastung oder ein Kriechen in der Brennkammerwand zu vermeiden. Dadurch kann ein dünneres Blech für die Brennkammerwand verwendet werden, wodurch die Kosten und das Gewicht sinken.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine teil-perspektivische Schnittansicht einer erfindungsgemäßen Unterlegscheibe im montierten Zustand, und
- Fig. 3: eine perspektivische Ansicht einer erfindungsgemäßen Unterlegscheibe.

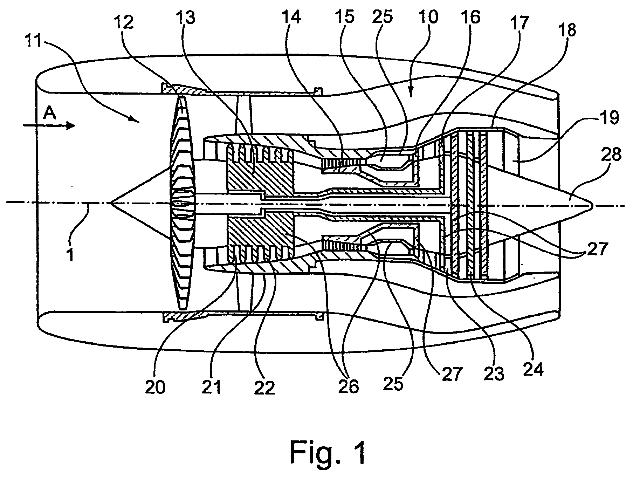

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufein 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotomabe 27 und die darauf angeordneten Turbinenrotorschaufeln 24 drehen sich im Betrieb um die Triebwerksachse 1.

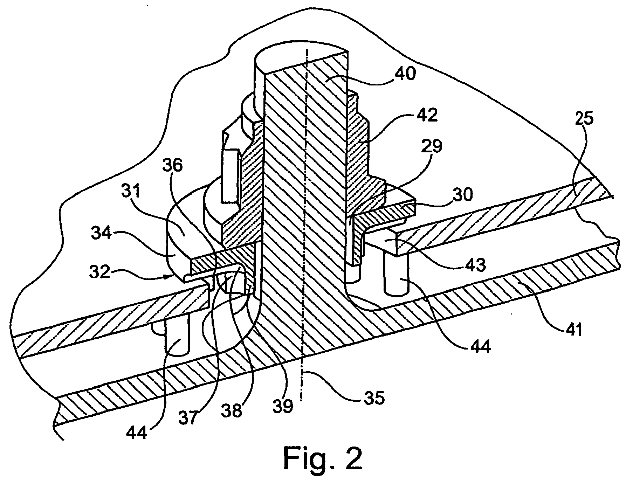

Die Fig. 2 zeigt einen montierten Zustand der erfindungsgemäßen Unterlegscheibe. Zunächst ist im Schnitt eine Brennkammerschindel 41 dargestellt, welche einstückig mit einem Gewindebolzen 40 versehen ist. Auf dem Gewindebolzen 40 ist eine Mutter 42 aufgeschraubt. Weiterhin zeigt die Fig. 2 im Querschnitt eine Brennkammerwand 25 mit einer Ausnehmung 43, durch welche der Gewindebolzen 40 durchgeführt wird. Die Brennkammerwand 25 ist mittels Abstandshaltern 44 von der Brennkammerschindel 41 beabstandet. Dies entspricht dem Stand der Technik.

Zwischen der Mutter 42 und der Brennkammerwand 25 ist eine erfindungsgemäße Unterlegscheibe angeordnet, diese wird durch die Mutter 42 gegen die Brennkammerwand 25 verspannt.

Die Unterlegscheibe weist eine mittige Ausnehmung 29 auf, welche an einem Grundkörper 30 ausgebildet ist Der Grundkörper 30 weist eine ebene erste Seite 31 auf, gegen welche die Mutter 42 anliegt. Eine zweite Seite 32 der Unterlegscheibe liegt gegen die Oberfläche der Brennkammerwand 25 an.

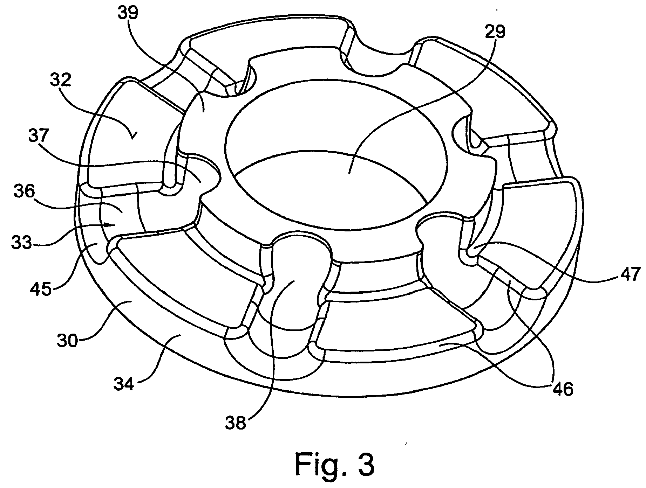

Wie insbesondere aus Figur 3 ersichtlich ist, sind an der zweiten Seite 32 gleichmäßig am Umfang verteilt mehrere Luftkanäle 33 ausgebildet, welche einen halbrunden oder halbelliptischen Querschnitt aufweisen. Die Luftkanäle 33 erstrecken sich zunächst in einem radialen Bereich 36 und werden an einem Übergangsbereich 38 in einen axialen Bereich 37 umgelenkt. Dies führt dazu, dass Kühlluft parallel zur Oberfläche der Brennkammerwand 25 eingeführt und parallel zur Oberfläche des Gewindebolzens 40 auf dessen Fußbereich ausgeleitet wird, so wie sich dies aus Fig. 2 ergibt.

Die Luftkanäle 33 sind von einem Umfangsrand 34 aus ausgebildet, wobei ein abgerundeter Einlaufbereich 45 vorgesehen ist, um die Einströmung der Kühlluft zu verbessern.

Im Bereich der axialen Bereiche 37 der Luftkanäle 33 ist die erfindungsgemäße Unterlegscheibe mittels eines Ansatzes 39 verlängert. Der Ansatz 39 kann so ausgebildet sein, dass er sich, wie in Fig. 2 dargestellt, durch die Ausnehmung 43 der Brennkammerwand 25 erstreckt, so dass die Kühlluft gezielter an den Fußbereich des Gewindebolzens 40 und die Brennkammerschindel 41 geleitet werden kann.

Weitere Ausrundungen 46 sind am Übergang der Kühlkanäle zur Auflagefläche 32 auf der Brennkammerwand 25 und zum Umfangsrand 34 angebracht Zusammen mit einem Freistich 47 am Übergang von der Auflagefläche 32 zum Kragen 39 sorgen sie dafür, dass es bei gekrümmten oder im Betrieb verformten Brennkammerwänden 25 zu keinem Einschneiden der Kanten der Unterlegscheibe auf der Brennkammerwand 25 oder der Ausnehmung 43, durch welche der Gewindebolzen 40 geführt wird, kommen kann.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenrotorschaufeln
- 25: Brennkammerwand
- 26: Kompressortrommel oder -scheibe
- 27: Turbinenrotomabe
- 28: Auslasskonus
- 29: mittige Ausnehmung
- 30: Grundkörper
- 31: erste Seite
- 32: zweite Seite
- 33: Luftkanal
- 34: Umfangsrand
- 35: Mittelachse
- 36: radialer Bereich des Luftkanals
- 37: axialer Bereich des Luftkanals
- 38: Übergangsbereich
- 39: Ansatz
- 40: Gewindebolzen
- 41: Brennkammerschindel
- 42: Mutter
- 43: Ausnehmung
- 44: Abstandshalter
- 45: Einlaufbereich
- 46: Ausrundung
- 47: Freistich

## Patentansprüche

1. Unterlegscheibe einer Brennkammerschindel einer Gasturbine, mit einem runden, scheibenförmigen, mit einer mittigen Ausnehmung (29) versehenen Grundkörper (30) mit einer auf einer ersten Seite (31) der Unterlegscheibe angeordneten ebenen Auflagefläche, wobei auf einer zweiten Seite (32) mehrere nutenartige Luftkanäle (33) ausgebildet sind, welche sich von einem Umfangsrand (34) der Unterlegscheibe radial (36), bezogen auf die Mittelachse (35) der Unterlegscheibe, erstrecken und im mittleren Bereich der Unterlegscheibe in Axialrichtung (37) verlaufen wobei an der zweiten Seite (32) ein die mittige Ausnehmung (29) verlängernder, mit den axialen Luftkanälen (37) versehener Ansatz (39) ausgebildet ist.

2. Unterlegscheibe nach Anspruch 1, **dadurch gekennzeichnet, dass** die Luftkanäle (33) einen im Wesentlichen halbkreisförmigen Querschnitt aufweisen.

3. Unterlegscheibe nach Anspruch 1, **dadurch gekennzeichnet, dass** die Luftkanäle (33) einen im Wesentlichen halbelliptischen Querschnitt aufweisen.

4. Unterlegscheibe nach einem der Ansprüche 1 bis 3, **dadurch gekennzeichnet, dass** der Übergangsbereich (38) von dem radialen zu dem axialen Bereich der Luftkanäle (33) abgerundet ist.

5. Unterlegscheibe nach einem der Ansprüche 1 bis 4, **dadurch gekennzeichnet, dass** der Einlauf (45) in den radialen Luftkanal (36) abgerundet ausgebildet ist.

6. Unterlegscheibe nach einem der Ansprüche 1 bis 5, **dadurch gekennzeichnet, dass** die Übergänge (46) der Luftkanäle (33) zur Auflagefläche (32) und zum Umfangsrand (34) ausgerundet sind.

7. Unterlegscheibe nach einem der Ansprüche 1 bis 6, **dadurch gekennzeichnet, dass** der Übergang zwischen der Auflagefläche (32) und dem Ansatz (39) mit einem Freistich (47) versehen ist.

8. Unterlegscheibe nach einem der Ansprüche 1 bis 7, **dadurch gekennzeichnet, dass** die radialen Luftkanäle (36) mit ihrer Mittelachse zu der zweiten Seite (32) beabstandet angeordnet sind.

9. Unterlegscheibe nach einem der Ansprüche 1 bis 8, **dadurch gekennzeichnet, dass** der axiale Luftkanal (37) in einem spitzen Winkel zur Mittelachse (35) angeordnet ist.

10. Unterlegscheibe nach einem der Ansprüche 1 bis 9, **dadurch gekennzeichnet, dass** die Unterlegscheibe kreisrund ausgebildet ist.

11. Unterlegscheibe nach einem der Ansprüche 1 bis 9, **dadurch gekennzeichnet, dass** die Unterlegscheibe oval ausgebildet ist.

## Claims

1. Washer of a combustion chamber tile of a gas turbine having a round disk-shaped basic body (30) provided with a central recess (29) and a flat contact surface arranged on a first side (31) of the washer, where several groove-like air ducts (33) are provided on a second side (32) that extend from a circumferential rim (34) of the washer radially (36) relative to the center axis (35) of the washer, and in the central area of the washer are directed in the axial direction (37), where on the second side (32) a projection (39) is provided, said projection (39) prolongating the central recess (29) and being provided with axial air ducts (37).

2. Washer in accordance with Claim 1, **characterized in that** the air ducts (33) have a substantially semi-circular cross-section.

3. Washer in accordance with Claim 1, **characterized in that** the air ducts (33) have a substantially semi-elliptical cross-section.

4. Washer in accordance with one of the Claims 1 to 3, **characterized in that** the transitional area (38) from the radial to the axial area of the air ducts (33) is rounded.

5. Washer in accordance with one of the Claims 1 to 4, **characterized in that** the intake (45) into the radial air duct (36) is designed rounded.

6. Washer in accordance with one of the Claims 1 to 5, **characterized in that** the transitions (46) of the air ducts (33) to the contact surface (32) and to the circumferential rim (34) are rounded.

7. Washer in accordance with one of the Claims 1 to 6, **characterized in that** the transition between the contact surface (32) and the projection (39) is provided with an undercut (47).

8. Washer in accordance with one of the Claims 1 to 7, **characterized in that** the radial air ducts (36) with their center axis are arranged at a distance from the second side (32).

9. Washer in accordance with one of the Claims 1 to 8, **characterized in that** the axial air duct (37) is arranged at an acute angle relative to the center axis (35).

10. Washer in accordance with one of the Claims 1 to 9, **characterized in that** the washer is designed round.

11. Washer in accordance with one of the Claims 1 to 9, **characterized in that** the washer is designed oval.

## Revendications

1. Rondelle d'un bardeau de chambre de combustion d'une turbine à gaz, comprenant un corps de base (30) circulaire, discoïdal, doté d'un évidement (29) central, avec une surface d'appui plane située sur une première face (31) de la rondelle, sachant que sur une seconde face (32) sont formés plusieurs canaux d'air (33) en forme de gorge, lesquels s'étendent depuis un bord périphérique (34) de la rondelle radialement (36) par rapport à l'axe médian (35) de la rondelle et, dans la zone centrale de la rondelle, sont dirigés dans le sens axial (37), sachant que sur la seconde face (32) est formé un collet (39) prolongeant l'évidement (29) central et muni des canaux d'air (37) axiaux.

2. Rondelle selon la revendication n° 1, **caractérisée en ce que** les canaux d'air (33) présentent une section transversale essentiellement semi-circulaire.

3. Rondelle selon la revendication n° 1, **caractérisée en ce que** les canaux d'air (33) présentent une section transversale essentiellement semi-elliptique.

4. Rondelle selon une des revendications n° 1 à n° 3, **caractérisée en ce que** la zone de transition (38) de la partie radiale à la partie axiale des canaux d'air (33) est arrondie.

5. Rondelle selon une des revendications n° 1 à n° 4, **caractérisée en ce que** l'entrée (45) dans le canal d'air (36) radial est arrondie.

6. Rondelle selon une des revendications n° 1 à n° 5, **caractérisée en ce que** les transitions (46) des canaux d'air (33) à la surface d'appui (32) et au bord périphérique (34) sont arrondies.

7. Rondelle selon une des revendications n° 1 à n° 6, **caractérisée en ce que** la transition entre la surface d'appui (32) et le collet (39) est munie d'une rainure de dégagement (47).

8. Rondelle selon une des revendications n° 1 à n° 7, **caractérisée en ce qu'**avec leur axe médian, les canaux d'air (36) radiaux sont situés à distance de la seconde face (32).

9. Rondelle selon une des revendications n° 1 à n° 8, **caractérisée en ce que** le canal d'air (37) axial est disposé en faisant un angle aigu avec l'axe médian (35).

10. Rondelle selon une des revendications n° 1 à n° 9, **caractérisée en ce que** la rondelle est circulaire.

11. Rondelle selon une des revendications n° 1 à n° 9, **caractérisée en ce que** la rondelle est ovale.
